# EUROPEAN PATENT APPLICATION

(11) **EP 0 903 956 A2**
(43) Date of publication of application: **24.03.1999**
(21) Application number: 98103818.5
(22) Date of filing: 04.03.1998
(51) Int. Cl.: H04Q 11/04

(54) **A network between a local exchange and an access network, and a semi-conductor large-scaled integrated circuit for use in the network**

(30) Priority: 21.08.1997 JP 225088/97
(71) Applicant: FUJITSU LIMITED, Kawasaki-shi, Kanagawa 211-8858 (JP)
(72) Inventor: Ishizuka, Sunao, Fujitsu Kyushu Dig. Tech. Ltd., Fukuoka-shi, Fukuoka-ken, 812-0011 (JP); Koyanagi, Masakatsu Fujitsu Kyushu Dig. Tech. Ltd., Fukuoka-shi, Fukuoka-ken, 812-0011 (JP); Hashinaga, Kenji, Fujitsu Kyushu Dig. Tech. Ltd., Fukuoka-shi, Fukuoka-ken, 812-0011 (JP); Kobayashi, Daisuke, Fujitsu Kyushu Dig. Tech. Ltd., Fukuoka-shi, Fukuoka-ken, 812-0011 (JP); Shigeoka, Yumiko, Fujitsu Kyushu Dig. Tech. Ltd., Fukuoka-shi, Fukuoka-ken, 812-0011 (JP)
(74) Representative: von Fischern, Bernhard, Dipl.-Ing.

(57) **Abstract**

An architecture realizes an interface processor of an access network (AN) by one chip semi-conductor large-scaled integrated circuit (LSI) suitable for a network according to both V5.1 and V5.2 specifications of a V5 interface standard. The semi-conductor large-scaled integrated circuit includes 2n (n means a positive integer) first circuits (18) for generating protocol data, 2n (n means a positive integer) second circuits (16) for generating a HDLC frame format by adding, at least, flags, to the protocol data generated in the first circuits (18) for generating the protocol data. The protocol data generated in the first circuit (18) is a link access procedure protocol of a V5 interface (4), and the HDLC frame is assembled by adding envelop function addresses and a frame check sequence to a link access procedure protocol of the V5 interface (4) of the second circuit (16).

## Description

### BACKGROUND OF THE INVENTION

### Field of the Invention

(1)

The present invention relates to a network between a local exchange (LE) and an access network (AN), and a semi-conductor large-scaled integrated circuit for use in the network.
(2)

More particularly, it relates to an interface architecture which is suitable for realizing functions of a V5 interface which is a new digital exchange interface by one chip LSI.

### Description of the Related Art

(3)

A network architecture in which an access network (AN) corresponding to multiplexing equipment on a subscriber line is arranged between subscriber terminals and an exchange has been proposed. The network architecture aims to connect conventional telephone terminals (PSTN: public switched telephone network and ISDN terminals to commonly used lines.
(4)

The V5 interface is an interface specification between a local exchange (LE) which corresponds to a terminal station of a switching network, and an access network (AN). This V5 interface is recommended by ITU-T (International Telecommunication Union).
(5)

The V5 interface includes interface specifications of V5.1 and V5.2. They are respectively standardized according to G964 and G965 of ITU-T recommendation.
(6)

The V5 interface uses 2.048 Mbps (64kbps × 32 time slots) as the basic unit, and audio of a telephone set and bearer data for one channel such as B-channel data of ISDN are all transmitted in one time slot (64 Kbps) unit.
(7)

In addition, control data between the local exchange (LE) and access network (AN) are transmitted using a specific time slot called a communication channel.
(8)

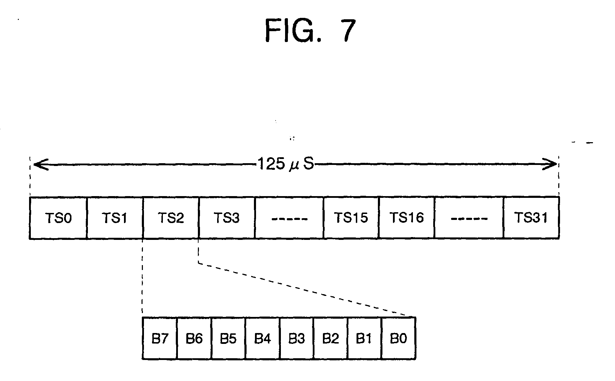

Fig. 7 is a diagram showing a transmission format of 2.048 Mbps. In Fig. 7, TS0 denotes a frame synchronizing time slot, TS1 through TS14, and TS17 through TS30 denote bearer data time slots. Further, TS15, TS16 and TS31 denote bearer data time slots or communication channel time slots.
(9)

One time slot is assigned for data transmission of bearer data required for 31 channels except the frame synchronizing time slot TS0.
(10)

Data of the communication channel have a message format. In this case, a unique procedure (protocol) which is based on the ISDN link access procedure on the D-channel called LAP-D protocol is used as the message format. The unique protocol is called LAP-V5 (link access procedure for V5).
(11)

The ISDN D-channel frame is also converted into the same frame format as the LAP-V5 and is transmitted using the same time slot, i.e., communication channel. The unique protocol is called as LAP-V5 (Link Access procedure frame).
(12)

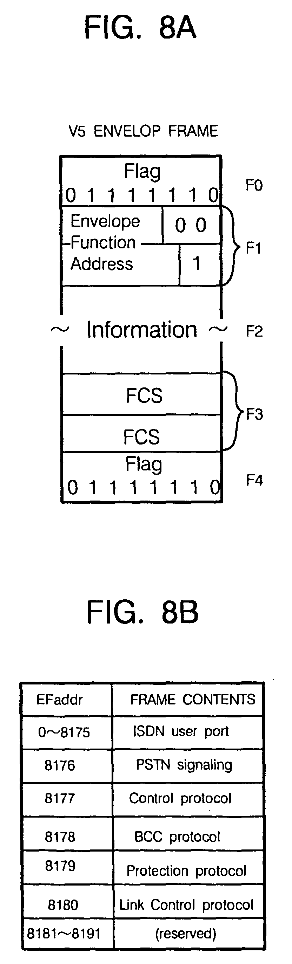

Figs. 8A and 8B are diagrams for explaining a format of the LAP-V5 frame. Fig 8A shows the format of the LAP-V5 frame (V5-envelop frame), and Fig. 8B shows the relationship of envelop function addresses (EFaddr: Envelop Function Address) and frame contents.
(13)

As shown in Fig. 8A, the LAP-V5 frame is made up of an address field F1 indicating the EF address, information F2 indicating data corresponding to the EF address, a frame check sequence (FCS) F3 for making error detection with respect to the EF address and the information, and further, flags F0 and F4 which are added to the start and end of the LAP-V5 frame.
(14)

The EF address is made up of 13 bits and is added with 3 bits of error bits. The address field F1 is made by adding the error bits. The error bits indicate a normal state when the bit values are "001" and otherwise indicate an abnormal state.
(15)

The frame contents of the EF addresses are the ISDN frame for the EF addresses (EFAddr) 0 to 8175, and LAP-V5 frame for the EF addresses (EFAddr) 8176 to 8191 as shown in Fig. 8B. Each frame is respectively used for ISDN frame and LAP-V5 frame standardized in V5 interface. The contents further includes spare for the addresses 8181 through 8191.
(16)

Further, in the LAP-V5 protocol information, the EF address 8176 indicates signaling information of a public switched telephone network (PSTN). The EF address 8177 indicates a control protocol which is connecting information of the V5 interface, the address 8178 indicates information of a bearer channel connection (BCC) protocol, the address 8179 indicates information of a protection protocol, and the address 8180 indicates information of a link control protocol.
(17)

An interface procedure for transmitting user data and control data using one line of 1.048 Mbps is standardized in V5.1. On the other hand, an interface procedure using maximum sixteen lines are standardized in V5.1. In V5.1 interface, PSTN Signaling indicated by the EF address 8176 and Control protocol indicated by the EF address 8177 protocols selected from the LAP-V5 frame of the EF addresses 8176 to 8180 shown in Fig. 8B are used. On the contrary, all addresses of the LAP-V5 frame are used in V5.2 interface.
(18)

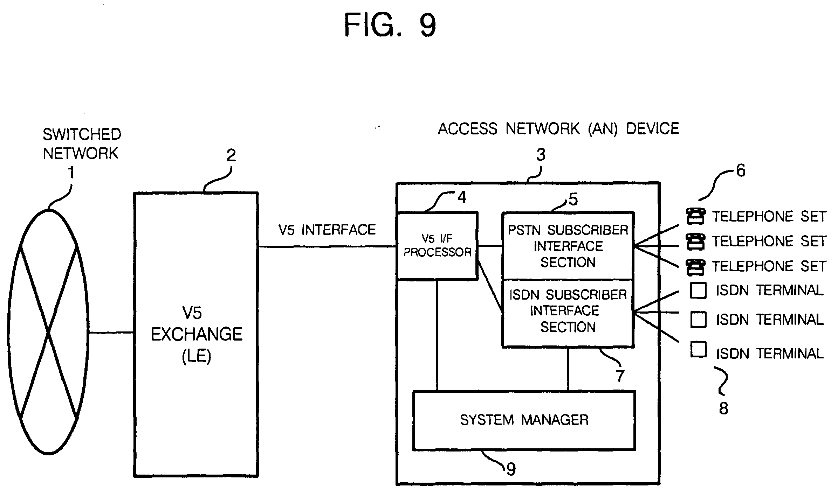

Fig. 9 is a system block diagram showing the construction of a network to which the present invention may be applied. In the network, a V5 exchange 2 which is a local exchange (LE) is coupled to the switched network 1. An access network (AN) 3 which is coupled to V5 exchange 2 via a transmission path of the V5 interface.
(19)

Access network (AN) 3 includes a V5 interface processor (V5 I/F) 4 which is provided with the functions for the V5 interface with respect to V5 exchange 2, a PSTN subscriber interface 5 which connects a plurality of telephone sets 6, and an ISDN subscriber interface 7 which connects a plurality of ISDN terminals 8.
(20)

The network further includes a system manager 9 which controls operations of V5 interface processor (V5 I/F) 4, PSTN subscriber interface 5 and ISDN subscriber interface 7.
(21)

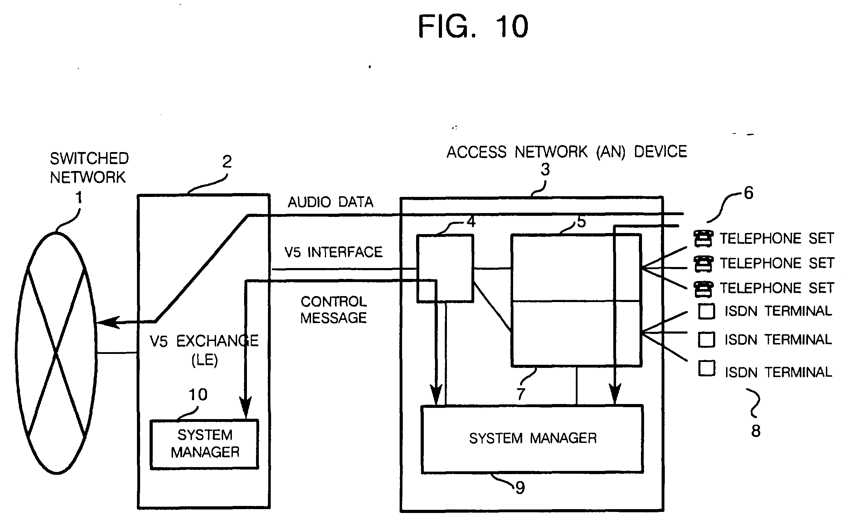

Fig. 10 is a system block diagram for explaining the operation of the network shown in Fig. 9 when the PSTN is in use. In Fig. 10, those parts which are the same as those corresponding parts in Fig. 9 are designated by the same reference numerals. In Fig. 10, V5 exchange 2 includes a system manager 10 for controlling the operation of V5 exchange 2. Signal flows are indicated by bold lines in Fig. 10.
(22)

In Fig. 10, audio data from telephone set 6 are transmitted and received using one of the time slots in the user data channel (TS1 through TS14, TS17 through TS30) of the V5 interface.
(23)

Hook information (on-hook, off-hook) and dial pulse information from telephone sets 6 are converted into the V5 message format in system manager 9 of access network (AN) 3. The converted information is exchanged between system manager 9 of access network 3 and system manager 10 of V5 exchange 2 using one of the time slots in the communication channel (TS15, TS16, TS31) of the V5 interface.
(24)

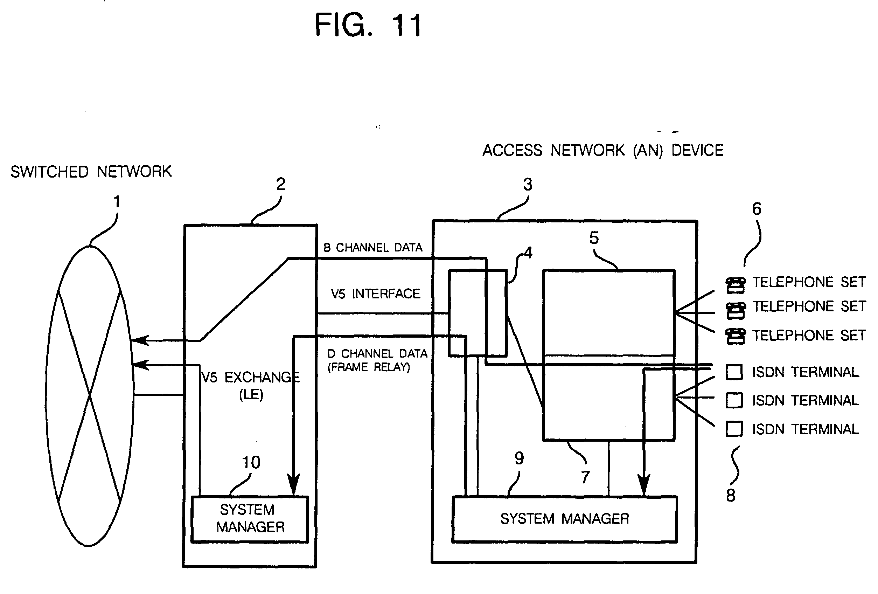

Fig. 11 is a system block diagram for explaining the operation of the network shown in Fig. 9 when the ISDN is in use. In Fig. 11, those parts which are the same as those corresponding parts in Fig. 9 are designated by the same reference numerals. Signal flows are indicated by bold lines in Fig. 11.
(25)

In Fig. 11, B-channel data from ISDN terminals 8 are transmitted and received using two time slots in the user data channel (TS1 through TS14, TS17 through TS30) of the V5 interface.
(26)

In addition, D-channel data from ISDN terminals 8 are added with the EF address and converted into an ISDN frame relay format of the V5 interface in system manager 9 of access network (AN) 3. The converted data are then exchanged between system manager 9 of access network 3 and system manager 10 of V5 exchange 2 using one of the time slots in the communication channel (TS15, TS16, TS31) of the V5 interface.
(27)

In order to reduce the size of access network (AN) 3 in the network structure shown in Fig. 9, it is desirable to realize the V5 interface processor 4 in the form of one chip LSI. But conventionally, various problems prevented the realization of the V5 interface functions by one chip LSI.
(28)

Additionally, as described above, one line of 2.048bps is accommodated in the V5.1 interface, and further, maximum sixteen lines of 2.048bps are accommodated in the V5.2 interface.
(29)

Therefore, it is desirable to commonly apply access network (AN) 3 made up of either the V5.1 or the V5.2 interface as the occasion may demand to make the access network (AN) 3 correspond to the network architecture.

### SUMMARY OF THE INVENTION

(30)

Accordingly, it is an object of the present invention to provide a network architecture which can realize an interface processor of an access network (AN) by one chip semi-conductor large-scaled integrated circuit (LSI) to meet the above-described demands.
(31)

Another and more specific object of the present invention is to provide an architecture which can realize an interface processor of an network by one chip semi-conductor large-scaled integrated circuit (LSI) suitable for a network according to both V5.1 and V5.2 standards of the V5 interface.
(32)

It is further object of the present invention to provide a network between a local exchange (LE) and an access network (AN), an LSI using the structure, and a network using the structure.
(34)

To achieve the above-described objects, a basic structure of a semi-conductor large-scaled integrated circuit includes 2n (n means a positive integer) first circuits, each for generating protocol data and 2n (n means a positive integer) second circuits, each for generating a HDLC frame format by adding, at least, a flag, to the protocol data generated in each of the first circuits.
(35)

In carrying out the present invention in one preferred mode, the semi-conductor large-scaled integrated circuit comprises a cross connect section for connecting the protocol data output from the 2n first circuits to either of the 2n second circuits and a time slot assignment section for outputting the HDLC frame format output from the second circuits which are coupled to the first circuits with timings of predetermined time slots by the cross connect section.
(36)

Further, in the detailed structure of the semi-conductor large-scaled integrated circuit, the protocol data generated in each of the first circuits is a link access procedure protocol of a V5 interface, and a HDLC frame is assembled by adding envelop function addresses and a frame check sequence to the link access procedure protocol of the V5 interface.
(37)

To achieve the above-described problems of the present invention, a basic structure of a network applying to the Vt.1 interface includes a local exchange, an access network device including a semi-conductor large-scaled integrated circuit includes four first circuits, each for generating a link access procedure protocol of a V5 interface and four second circuits, each for assembling a HDLC frame by adding envelop function addresses, a frame check sequence and flags to the link access procedure protocol of the V5 interface, and two V5.1 interface lines which are coupled between the local exchange and the access network device, wherein two of the four first circuits are set in one, and public switched telephone network signaling and control protocols corresponding to each of the two V5.1 interface lines are generated in each set of two of the four first circuits.
(38)

In one referred mode of the network, two of the second circuits selected from the four second circuits include the public switched telephone network signaling and control protocols generated in two sets of the first circuits to assemble a HDLC frame.
(39)

In other referred mode of the network, the semi-conductor large-scaled integrated circuit further includes a time slot assignment section for assigning the HDLC frame to predetermined time slots.
(40)

To achieve the above-described problems of the present invention, a basic structure of the network applying to the V5.1 interface includes a local exchange, an access network device including first and second semi-conductor large-scaled integrated circuits, each having four first circuits for generating a link access procedure protocol of a V5 interface and four second circuits for assembling a HDLC frame by adding envelop function addresses, a frame check sequence and flags to the link access procedure protocol of the V5 interface, and a V5.2 interface line for connecting the local exchange to the access network device, wherein public switched telephone network signaling, control, bearer channel connection and link control protocols corresponding to the V5.2 interface are generated in the four first circuits of the first semi-conductor large-scaled integrated circuit, and a protection protocol corresponding to the V5.2 interface line is generated in the two first circuit selected from the four first circuits of the second semi-conductor large-scaled integrated circuit.
(41)

In one mode of the network, a second circuit selected from four second circuits of the first semiconductor integrated circuit receives pubic switched telephone network signaling, control, bearer channel connection, and link control protocols generated in the four second circuits, and two second circuits selected from the four second circuits of the second semi-conductor large-scaled integrated circuit receive a protection protocol generated in the two first circuits.
(42)

Further, in one mode of the network, each of the first and second semi-conductor large-scaled integrated circuits further includes a time slot assignment section for assigning the HDLC frame to predetermined time slots.
(43)

Additionally, in a detailed mode of the network, each of the first and second semi-conductor large-scaled integrated circuits further includes a contention arbitrator section for arbitrating timing contention for assigning the HDLC frame generated in each of the time slot assignment sections to the predetermined time slots.
(44)

A network according to the present invention employing an applied example when sixteen lines of V5.2 interface includes a local exchange, an access network device including 24/n (n means a positive integer) semi-conductor large-scaled integrated circuits, each having 2n (n means a positive integer) first circuits for generating a link access procedure protocol of a V5 interface and 2n (n means a positive integer) second circuits for assembling a HDLC frame by adding envelop function addresses, a frame check sequence and flags to the link access procedure protocol of the V5 interface, and a V5.2 interface line for connecting the local exchange to the access network device.
(45)

Then, generation of communication data required for one time slot is assigned to each of the first circuits of the 24/n semi-conductor large scaled integrated circuits. In here, the above described n is 2 as a detailed example. Thereby, it becomes possible to assign one of the first circuits to every one channel of 24 channels by employing the twelve semi-conductor large-scaled integrated circuits having same structures.
(33)

Other objects of the present invention become clear by the description for explaining embodiments according to the attached drawings.

### BRIEF DESCRIPTION OF THE DRAWINGS

Fig. 1 is a structural block diagram of an embodiment explaining parts when realizing a V5 interface processor 4 by one chip LSI according to the present invention.
Fig. 2 shows an embodiment for applying a V5 interface processor 4 of a V5 LSI 11 which is realized by one chip LSI to a V5.1 interface.
Fig. 3 shows a relationship between LAP-V5 controllers and HDLC controllers in a cross connect section 19.
Fig. 4 is a structural block diagram of an embodiment of the construction of a network when applying V5 LS1 11 according to the present invention to a V5.2 interface.
Fig. 5 shows an example for employing the embodiment shown in Fig. 4 for line switching between a working primary line PL and a protection secondary line SL.
Fig. 6 shows other embodiment according to the present invention.
Fig. 7 is a diagram showing a transmission format of 2.048 Mbps.
Figs. 8A and 8B respectively are diagrams for explaining a format of the LAP-V5 frame.
Fig. 9 is a system block diagram showing the construction of a network to which the present invention may be applied.
Fig. 10 is a system block diagram for explaining the operation of the network shown in Fig. 9 when the PSTN is in use.
Fig. 11 is a system block diagram for explaining the operation of the network show in Fig. 10 when the ISDN is in use.

### DESCRIPTION OF THE PREFERRED EMBODIMENTS

(46)

Embodiments according to the present invention will be now explained in accompanying with the attached drawings. Throughout the following descriptions, the same reference numerals and symbols are used to denote and identify corresponding or identical components.
(47)

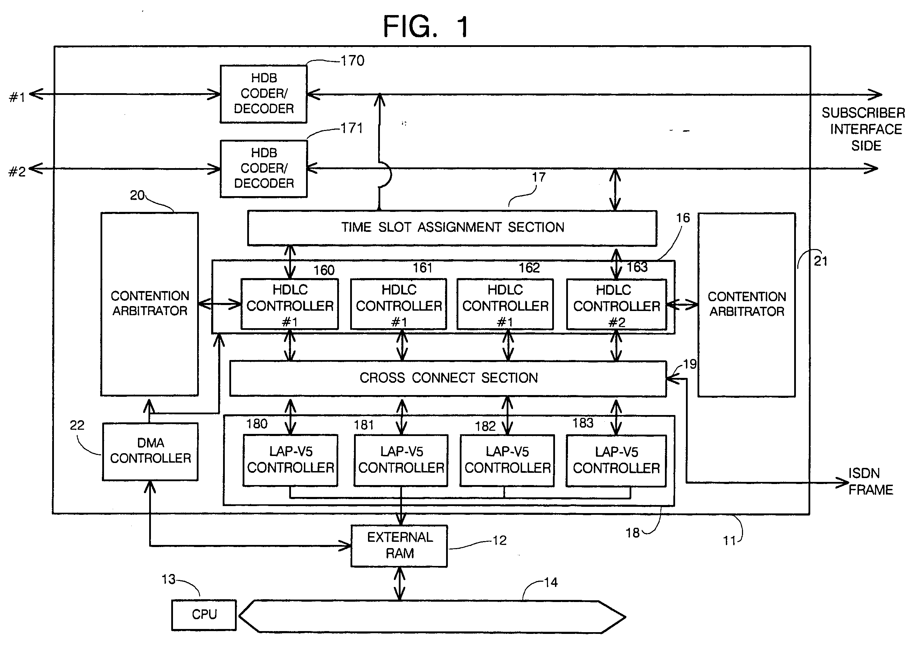

Fig. 1 is a structural block diagram of an embodiment explaining parts by which V5 interface processor 4 can be realized by one chip LSI (Hereinafter, it is called V5 LSI) according to the present invention.
(48)

V5 LSI 11 shown in Fig. 1 is coupled to a random access memory (RAM)12 which is provided externally to V5 LSI 11. V5 LSI 11 is further coupled to a central processing unit (CPU) 13 which controls the general operation of V5 LSI 11 through an external RAM 12 and a processor bus 14.
(49)

In this example, V5 LSI 11 includes a HDLC (high-level data link control-procedure) controlling section 16 and a LAP-V5 controlling section 18.
(50)

HDLC (high-level data link control-procedure) controlling section 16 includes four HDLC controllers 160 to 163. Correspondingly, LAP-V5 controlling section 18 includes four LAP-V5 controllers 180 to 183.
(51)

Each of LAP-V5 controllers 180 to 183 in LAP-V5 controlling section 18 processes LAP-V5 protocols. That is, it generates frame contents corresponding to EF addresses 8176 through 8180 according to a command transmitted from a CPU 13.
(52)

On the other hand, each of HDLC controllers 160 to 163 in the above-described HDLC controlling section 16 includes functions for assembling a V5 envelop frame by attaching a EF address F1, a FCS F3 and Flags F0 and F4 which are added to the start and end of the frame contents corresponding to EF addresses 8176 through 8180 generated in LAP-V5 controllers 180 to 183, i.e., information F2 shown in Fig. 8A, and disassembling the transmitted frame from V5 local exchange 2, as described in Fig. 8A.
(53)

V5 LSI 11 further includes a cross connect section 19 and a time slot assignment section 17. The cross connect section 19 controls interactive connection between HDLC controller 160 through 163 and LAP-V5 controllers 180 through 183 corresponding to EF addresses. Therefore, HDLC controller selected from HDLC controllers 160 through 163 which is coupled to LAP-V5 controllers 180 to 183 executes the functions of the above-described HDLC controller.
(54)

Further, time slot assignment section 17 assigns timings of time slots TS15, TS16 and TS31 described in Fig. 7 to outputs from four HDLC controllers 160 through 163.
(55)

That is, time slot assignment section 17 inserts communication channel data outputted from HDLC controller 160 through 163 to which time slot timings are assigned or V5 frame data including ISDN frame, which is explained later, on lines #1 and #2 of 2.048 Mbps with timings of TS15, TS16 and TS31.
(56)

ISDN contention arbitrators 20 and 21 contend to prevent from duplicating on assignment of time slots TS15, TS16 and TS31 to communication channels between V5 LSIs when using a plurality of V5 LSIs 11 having the same constructions, which are explained later.
(57)

Data and B channel data of ISDN line transmitted from subscriber telephone sets through a subscriber interface side, and communication data assigned to time slots TS15, TS16 and TS31 inserted from time slot assignment section 17 are converted into HDB coded signals by HDB coder/decoder 170 and 171 and are transmitted to the V5 interface lines #1 and #2.
(58)

DMA controller 22 controls DMA transfer of data between external RAM 12, HDLC controller 16, LAP-V5 controllers 18 and ISDN contention arbitrators 20 and 21.
(59)

Further, V5 LSI 11 in Fig. 1 includes a control register and a status register, not show in Fig. 1 which hold command information of and status information of CPU 13, respectively.
(60)

As show in Fig. 1, V5 interface processor 4 can be realized by one chip V5 LSI in an embodiment of the present invention. Further in Fig. 1, HDLC controlling section 16 is made up of four HDLC controllers 160 through 163, and LAP-V5 controlling section 18 is made up of four LAP-V5 controllers 180 through 183.
(61)

That is, in the present invention, 2n of HDLC controllers 160 through 163 are provided in HDLC controlling section 16, and 2n of LAP-V5 controllers 180 through 183 are provided in LAP-V5 controlling section 18, respectively. In here, n means a positive integer.
(62)

An example of a network configuration according to the present invention will be explained by employing V5 interface processor 4 of one chip LSI 11 shown in Fig. 1. More particularly, access network (AN) will be mainly explained.
(63)

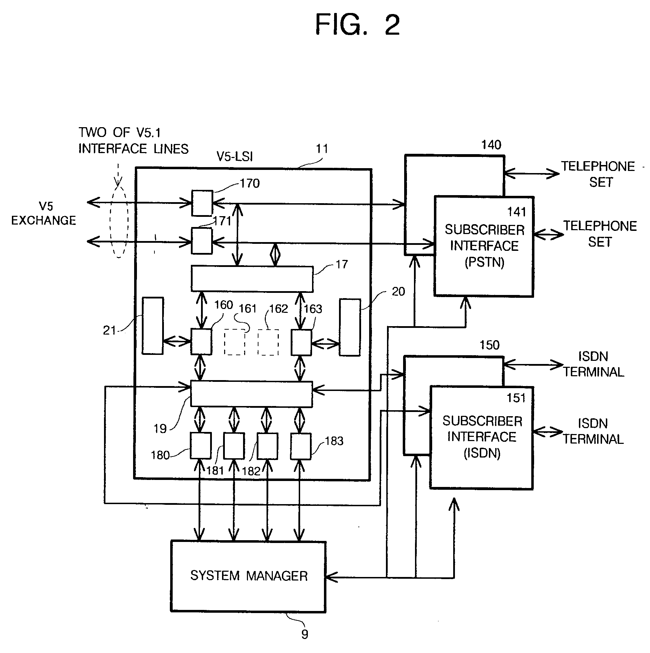

Fig. 2 shows an embodiment of the V5.1 interface employing the V5 interface processor 4 of V5 LSI 11 realized by one chip LSI according to the present invention shown in Fig. 1. In this embodiment, access network (AN) 3 is coupled to V5 local exchange 2 through two of the V5.1 interface lines.
(64)

On the other hands, access network (AN) 3 is coupled to public switched telephone sets and ISDN B channels through two subscriber interfaces 140 and 141 corresponding to two lines of the V5.1 interfaces. The network is further coupled to the D-channels of ISDN terminals through two ISDN subscriber interfaces 150 and 151 corresponding to two lines of V5.1 interfaces. In Fig. 2, one part of V5 LSI 11 which forms the V5 interface processor 4 shown in Fig. 1 will be abbreviated.
(65)

In this example, as explained in Fig. 8, the LAP-V5 protocols used in the V5.1 interface are PSTN signaling indicated by the EF address 8176 and CONTROL protocol indicated by the EF address 8177 (refer to Fig. 8B). Therefore, when there are the two lines of the V5.1 interface, i.e., two channels are accommodated in the V5.1 interface, two sets of LAP-V5 protocol controllers, i.e., total four controllers, are required.
(66)

In Fig. 2, four LAP-V5 protocol controllers 180 through 183 fulfill functions for controlling four LAP-V5 protocols. That means two sets of a PSTN Signaling indicated by the EF address 8176 and a CONTROL protocol indicated by the EF address 8177 which are two control protocols for V5.1 are assembled as LAP-V5 frames in LAP-V5 controllers 180, 181, 182 and 183 of LAP-V5 controlling section 18.
(67)

The two sets of the assembled LAP-V5 frames are transmitted to HDLC controlling section 16 through a cross connect section 19. Cross connect section 19 fixedly assigns the two sets of LAP-V5 frames in each set of a PSTN indicated by the EF address 8176 and CONTROL protocol indicated by the EF address 8177, to HDLC controlling section 16.
(68)

D channel data of the ISDN line transmitted through subscriber interfaces 150 and 151 which is inputted to cross connect section 19 are similarly assigned to HDLC controlling section 16. In Fig. 2, the D-channel data are assigned to HDLC controller 160 and 163.
(69)

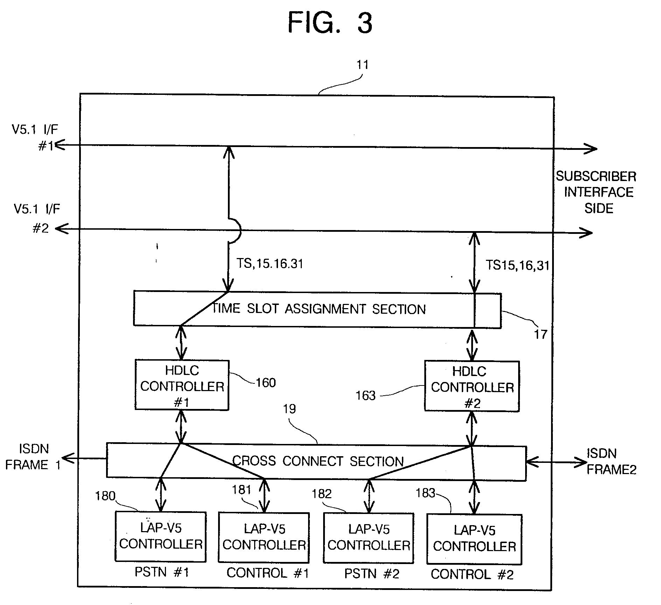

Fig. 3 explains an assignment example in detail. In Fig. 3, one part of the structure of V5 LSI 11 will be abbreviated here. The cross connect section 19 assigns PSTN #1 and CONTROL #1 protocols assembled as the LAP-V5 frames in LAP-V5 controller 180 and 181 to HDLC controller 160. Simultaneously, an ISDN frame 1 corresponding to the D-channel transmitted from ISDN subscriber interface 150 is inputted to HDLC controller 160.
(70)

On the other hand, PSNT #2 and CONTROL #2 protocols assembled as LAP-V5 frames in LAP-V5 controllers 182 and 183 are assigned to the HDLC controller 163. Simultaneously, an ISDN frame 2 corresponding to the D-channel transmitted from ISDN subscriber interface 151 is inputted to HDLC controller 163.
(71)

Therefore, in the embodiment shown in Fig. 2, there is no need to employ the functions of HDLC controllers 161 and 162 in V5 LSI 11.
(72)

Returning to Fig. 2 and the explanation will be further explained. HDLC controller 160 calculates a frame check sequence (FCS) for the LAP-V5 frame from LAP-V5 controller 180 which is transmitted through cross connect section 19 and ISDN frame 1 transmitted from ISDN subscriber terminals through ISDN subscriber interface 150, and adds the calculated frame check sequences to assemble a HDLC frame.
(73)

HDLC controller 163 similarly calculates a frame check sequence (FCS) for the LAP-V5 frame from LAP-V5 controller 181, which is transmitted through a cross connect section 19 and the ISDN frame 2 transmitted from the ISDN subscriber terminal through the ISDN subscriber interface 151, and adds the calculated sequences to assemble the HDLC frame.
(74)

Then, time slot assignment section 17 assigns and transmits the two assembled HDLC frames to time slots TS15, TS16 and TS31 of the V5.1 interface in each of V5.1 interface lines #1 and #2.
(75)

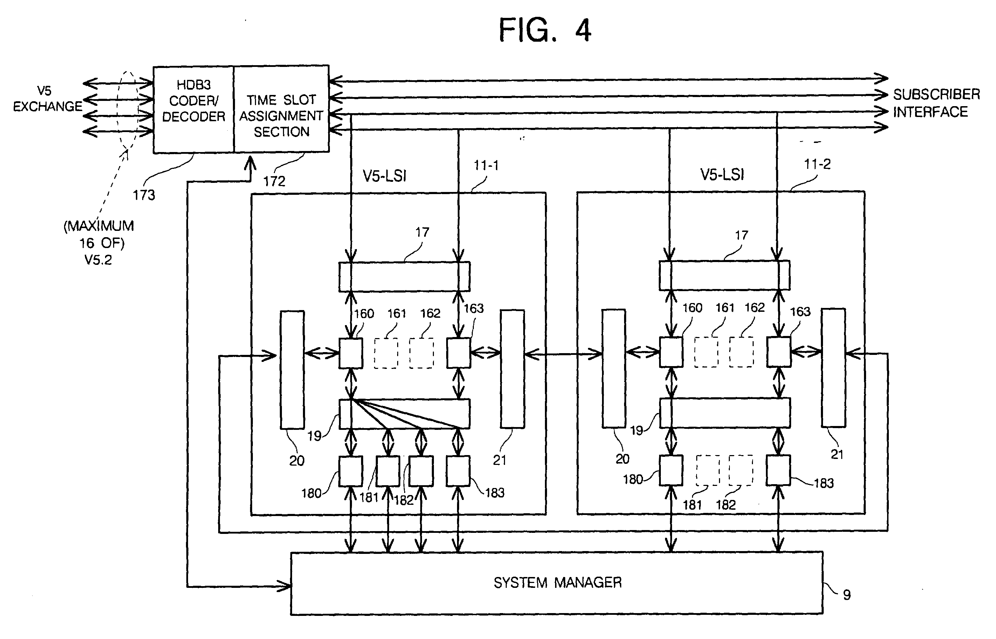

Fig. 4 is a structural block diagram of the construction of a network when applying V5 LSI 11 according to the present invention to the V5.2 interface. In this example, two of V5 LSIs 11-1 and 11-2 having the same structure shown in Fig. 1 are employed. Further, in Fig. 4, each component of V5 LSIs 11-1 and 11-2 are shown as making the structure shown in Fig. 1 simple for emphasizing requirements.
(76)

In two of the VS LSIs 11-1 and 11-2, six LAP-V5 controllers are employed. Further, two HDLC controllers are employed in each LSI.
(77)

Thereby, four protocols PSTN indicated by EF address 8176, CONTROL indicated by the EF address 8177, BCC indicated by the EF address 8178 and LINK indicated by the EF address 8180 which are generated in LAP-V5 controllers 180 to 183 selected from five protocols required for the V5.2 interface in the LAP-V5 frame, as explained in Fig. 8 are collectively connected to one HDLC controller, for example, the HDLC controller 160 or the HDLC controller 163, in the first V5 LSI 11-1.
(78)

Further, LAP-V5 controllers 180 and 183, of second LSI 11-2, respectively generate an extra PROTECTION protocol indicated by the EF address 8179, which is a fifth protocol. The protocols generated in the controllers 180 and 183 are connected to the HDLC controllers 160 and 163, fixedly.
(79)

In this way, an important PROTECTION protocol is duplicated, and therefore, it is possible to select a normal PROTECTION protocol by the second V5 LSI 11-2.
(80)

In the example shown in Fig. 4, the four protocols generated in LAP-V5 controllers 180 through 183 of the first V5 LSI 11-1 are connected to HDLC controller 160. Therefore, time slots TS15, TS16 and TS17 are assigned to the four protocols connected to HDLC controller 160 and a protection protocol which is generated in LAP-5V controller 183 of the second V5 LSI 11-2 and is connected to HDLC controller 163.
(81)

In here, assignments of time slots TS15, TS16 and TS17 are respectively performed in time slot assignment sections 17 of the first and second V5 LSIs 11-1 and 11-2.
(82)

Therefore, there is a possibility to contend assignments of time slots TS15, TS16 and TS17 in time slot assignment sections 17 of the first and second V5 LSIs 11-1 and 11-2.
(83)

In Fig.4, assignment contention of time slots TS15, TS16 and TS17 are arbitrated between contention arbitrator 20 of the first V5 LSI 11-1 and contention arbitrator 21 of the second V5 LSI 11-2.
(84)

When HDLC controller 163 of the first V5 LSI 11-1 and HDLC controller 160 of the second V5 LSI 11-2 are employed in Fig. 4, assignment contention of time slots TS15, TS16 and TS 17 are arbitrated between contention arbitrator 21 of the first V5 LSI 11-1 and contention arbitrator 20 of the second V5 LSI 11-2.
(85)

In Fig. 4, a time slot assignment section 172 which is controlled by system manager 9 is further provided in the exterior of the first and second V5 LSIs 11-1 and 11-2.
(86)

Accordingly, communication channels of VS LSIs 11-1 and 11-2 and user data of the public switched telephone network (PSTN) transmitted from the subscriber interfaces are multiplexed by time slot assignment section 172. Then, HDB coder/decoder 173 converts the multiplexed data into HDB codes to transmit to the V5.2 interface.
(87)

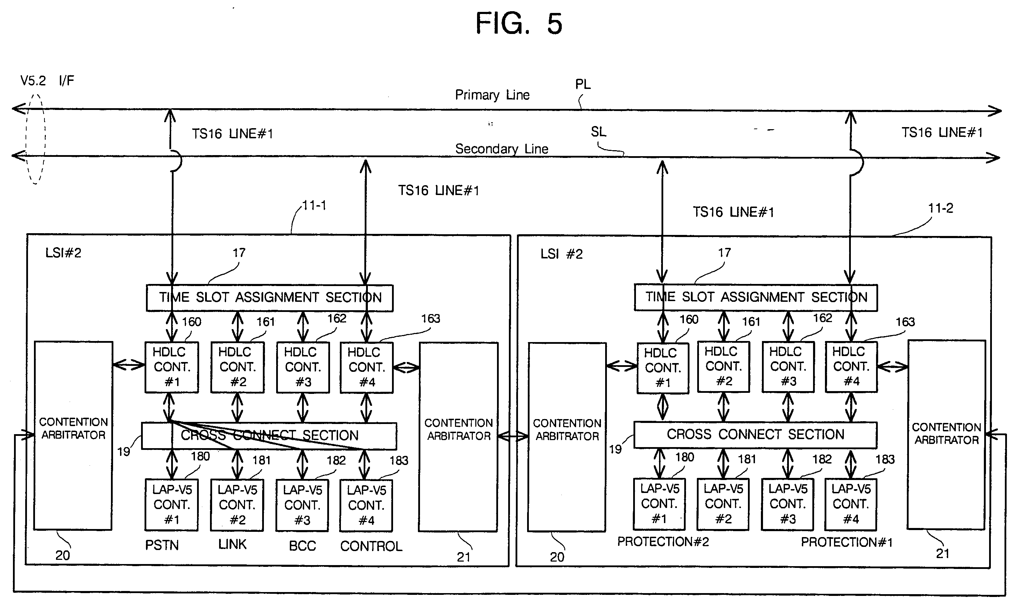

Fig. 5 shows an example employing a working primary line PL and a protection secondary line SL in the structure of the example shown in Fig. 4. Therefore, it becomes possible to keep communications with V5 local exchange 2 by the use of five protocols necessary for the V5.2 interface by employing the other line when a failure occurs in one line.
(88)

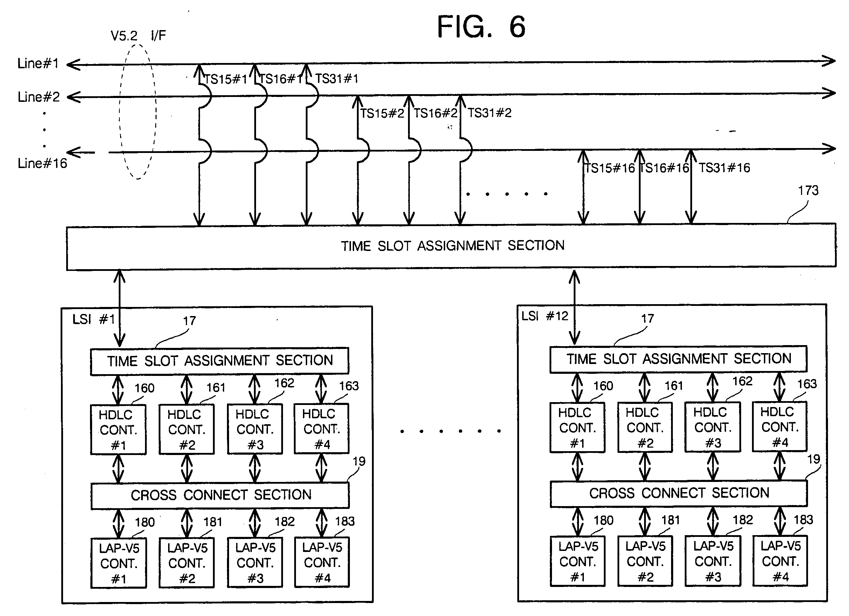

That is, in Fig. 6, four protocols collected in HDLC controller 160 of the first V5 LSI 11-1 and a protection protocol inputted to HDLC controller 163 of the second V5 LSI 11-2 are connected to working primary line PL.
(89)

When a failure occurs on the working primary line PL, four protocols are collected in HDLC controller 163 of the first V5 LSI 11-1 and a protection protocol inputted to HDLC controller 160 of the second V5 LSI 11-2 are connected to protection secondary line SL to relieve the fault on the working primary line PL.
(90)

In Fig. 5, the relationship between contention arbitrator 20 of the first V5 LSI 11-1 and contention arbitrator 21 of the second V5 LSI 11-2 and the relationship between contention arbitrator 21 of the first V5 LSI 11-1 and contention arbitrator 20 of the second V5 LSI 11-2 are the same as those shown in Fig. 4.
(91)

Fig. 6 shows another embodiment according to the present invention. As explained above, sixteen lines are accommodated in the V5.2 interface. Signals of 2.048 Mbps are flowing on each line and communication channels are assigned to time slots TS15, TS16 and TS 31.
(92)

Therefore, forty-eight communication channels are required to the sixteen lines. In Fig. 6, twelve V5 LSIs having the same structure are employed. Thereby, it becomes possible to assign one LAP-V5 controller in every channel to monitor the line.
(93)

As explained according to the embodiments, in the present invention, 2n (n means a positive integer) LAP-V5 controllers for generating protocol data, and 2n (n means a positive integer) HDLC controllers for generating HDLC frame format by adding flags to the protocol data are provided in one LSI.
(94)

Therefore, in the above described embodiments, n=2, that means four LAP-V5 controllers and four HDLC controllers, are provided in one LSI. However, the present invention is not limited to such the example.
(95)

For example, n=3, that means six LAP-V5 controllers and six HDLC controllers, can be also provided in one LSI.
(96)

In this case, it becomes possible to accommodate three V5.1 interfaces by applying to the embodiment shown in Fig. 2. Further, only one V5 LSI can be enough when employing in the embodiment shown in Fig. 4. Therefore, there is no need to use contention arbitrators 20 and 21.
(97)

If n=3, only eight VS LSIs are employed by applying to the embodiment shown in Fig. 6.
(98)

As explained according to the embodiments, it becomes possible to realize functions corresponding to the V5.1 and V5.2 interfaces by one chip LSI and largely reduce a circuit scale on controlling the V5 interface and V5 protocols.
(99)

Further, it is possible to apply to the V5.1 and V5.2 interfaces as required, and therefore, the LSI according to the present invention can be employed in a wide range.

The present invention may be embodied in other specific forms without departing from the sprit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A semi-conductor large-scaled integrated circuit, comprising:
2n (n means a positive integer) first circuits (18), each for generating protocol data; and
2n (n means a positive integer) second circuits (16), each for generating a HDLC frame format by adding, at least, a flag, to the protocol data generated in each of said first circuits (18).

2. The semi-conductor large-scaled integrated circuit according to claim 1, further comprising:
a cross connect section (19) for connecting the protocol data output from said 2n first circuits (18) to either of said 2n second circuits (16) and a time slot assignment section (17) for outputting the HDLC frame format output from said second circuits (16) which are coupled to said first circuits (18) with timings of predetermined time slots by said cross connect section (19).

3. The semi-conductor large-scaled integrated circuit according to claim 1, characterized in that the protocol data generated in each of said first circuits (18) is a link access procedure protocol of a V5 interface (4), and that a HDLC frame is assembled by adding envelop function addresses and a frame check sequence to said link access procedure protocol of the V5 interface (4).

4. A network, comprising:
a local exchange (2);
an access network device (3) including a semi-conductor large-scaled integrated circuit (11) includes four first circuits (18), each for generating a link access procedure protocol of a V5 interface (4) and four second circuits (16), each for assembling a HDLC frame by adding envelop function addresses, a frame check sequence and flags to the link access procedure protocol of said V5 interface (4); and
two V5.1 interface lines which are coupled between said local exchange (2) and said access network device (3), characterized in that two of said four first circuits (18) are set in one, and that public switched telephone network signaling and control protocols corresponding to each of said two V5.1 interface lines are generated in each set of two of the four first circuits (18).

5. The network according to claim 4, characterized in that said two of the second circuits (16) selected from said four second circuits (16) include the public switched telephone network signaling and control protocols generated in two sets of said first circuits (18) to assemble a HDLC frame.

6. The network according to claim 4, characterized in that said semi-conductor large-scaled integrated circuit (11) further includes a time slot assignment section (17) for assigning said HDLC frame to predetermined time slots.

7. A network, comprising:
a local exchange (2);
an access network device (3) including first and second semi-conductor large-scaled integrated circuits (11-1, 11-2), each having four first circuits (18) for generating a link access procedure protocol of a V5 interface (4) and four second circuits (16) for assembling a HDLC frame by adding envelop function addresses, a frame check sequence and flags to the link access procedure protocol of said V5 interface (4); and
a V5.2 interface line for connecting said local exchange (2) to said access network device (3), characterized in that the public switched telephone network signaling, control, bearer channel connection and link control protocols corresponding to said V5.2 interface are generated in the four first circuits (18) of said first semi-conductor large-scaled integrated circuit (11-1), and that a protection protocol corresponding to said V5.2 interface line being generated in the two first circuits (18) selected from the four first circuits (18) of said second semi-conductor large-scaled integrated circuit.

8. The network according to claim 7, characterized in that a second circuit (16) selected from four second circuits (16) of said first semi-conductor integrated circuit receives pubic switched telephone network signaling, control, bearer channel connection, and link control protocols generated in said four second circuits (16), and that two second circuits (16) selected from the four second circuits (16) of said second semi-conductor large-scaled integrated circuit receive a protection protocol generated in said two first circuits (18).

9. The network according to claim 7, characterized in that each of said first and second semi-conductor large-scaled integrated circuits (11-1, 11-2) further includes a time slot assignment section (17) for assigning said HDLC frame to predetermined time slots.

10. The network according to claim 9, characterized in that each of said first and second semi-conductor large-scaled integrated circuits (11-1, 11-2) further includes a contention arbitrator section for arbitrating timing contention for assigning said HDLC frame generated in each of said time slot assignment sections (17) to the predetermined time slots.

11. A network, comprising:
a local exchange (2);
an access network device (3) including 24/n (n means a positive integer) semi-conductor large-scaled integrated circuits (11), each having 2n (n means a positive integer) first circuits (18) for generating a link access procedure protocol of a V5 interface (4) and 2n (n means a positive integer) second circuits (16) for assembling a HDLC frame by adding envelop function addresses, a frame check sequence and flags to the link access procedure protocol of said V5 interface (4); and
a V5.2 interface line for connecting said local exchange (2) to said access network device (3), characterized in that generation of communication data required for one time slot is assigned to each of said first circuits (18) of said 24/n semi-conductor large scaled integrated circuits (11). 12. The network according to claim 11, characterized in that said n is 2.
